# EUROPÄISCHE PATENTANMELDUNG

(11) **EP 0 771 858 A1**
(43) Veröffentlichungstag der Anmeldung: **07.05.1997**
(21) Anmeldenummer: 96115355.8
(22) Anmeldetag: 25.09.1996
(51) Int. Cl.: C09D 5/36, G08G 1/017, G06K 19/18

(54) **Kennzeichnung für mit einem Effektlack lackierte Gegenstände und Verfahren zur Herstellung der Kennzeichnung**

(30) Priorität: 05.11.1995 DE 19541028
(71) Anmelder: DAIMLER-BENZ AKTIENGESELLSCHAFT, 70567 Stuttgart (DE)
(72) Erfinder: Dannenhauer, Fritz, Dr., 79686 Hasel (DE); Holdik, Karl, Dr., 89081 Ulm (DE)

(57) **Zusammenfassung**

Die Erfindung betrifft Effektlack für zu lackierende Gegenstände mit Pigmenten sowie ein Verfahren zu dessen Herstellung. Die durch Verkleinern eines gerackelten und vernetzten Films hergestellten, einem Ausgangslack einer Lackierung des Gegenstandes beigegebenen und einen vom Beobachtungswinkel abhängigen Farbeffekt ergebenden Pigmente werden mit einer Kennzeichnung versehen, die zur Erkennung und Charakterisierung des Gegenstandes dient.

## Beschreibung

Die Erfindung betrifft eine Kennzeichnung für mit einem Effektlack lackierte Gegenstände gemäß dem Oberbegriff des Anspruchs 1 sowie ein Verfahren zu deren Herstellung der Kennzeichnung gemäß dem Oberbegriff des Anspruchs 9, wie beides aus der gattungsbildend zugrundegelegten DE 42 40 743 A1 als bekannt hervorgeht.

Die DE 42 40 743 A1 offenbart ein Verfahren zur Herstellung von Pigmenten, welche Pigmente einen vom Betrachtungswinkel abhängigen Farbeffekt ergeben. Eine Kennzeichung des Fahrzeuges unter Zuhilfenahme der Lackierung ist hier nicht erwähnt.

Die DE 43 35 308 A1 offenbart eine Kennzeichnung von Fahrzeugen, bei den im der mehrschichtigen Lackierung Pigmente angeordnet sind. Die Kennzeichnung erfolgt durch einen Kode, der entweder auf die Pigmente aufgebracht ist und/oder den die Pigmente selbst bilden. Die Aufbringung dieser Kodierung auf die Pigmente ist allerdings sehr aufwendig und damit sehr teuer.

Die Aufgabe der Erfindung ist es, eine gattungsgemäß zugrundegelegte Kennzeichnung dahingehend weiterzuentwickeln, daß die Kennzeichnung des Gegenstandes unter Zuhilfenahme der Effekt-Lackierung vereinfacht wird. Des weiteren ist es Aufgabe der Erfindung, Verfahren zur Vornahme der Kennzeichnung anzugeben.

Die Aufgabe wird bei einem zugrundegelegten Effektlack durch die kennzeichnenden Merkmale des Anspruchs 1 bzw. bzgl. des zugrundegelegten Verfahrens mit den kennzeichnenden Verfahrensschritten des Anspruchs 9 gelöst. Durch die bereits bei der Herstellung der Pigmente erfolgende Kodierung derselben, ist es auf einfache Weise möglich, eine insbesondere fahrzeugspezifische Kennzeichnung der Lackierung bereits bei der Pigmentherstellung vorzunehmen. Des weiteren ist es durch die Pigmentierung möglich, einen Lack zur Nachlackierung mit der richtigen Kennzeichnung zu versehen.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt
- Fig. 1: einen Schnitt durch auf einem Gegenstand befindliche Lackierung,
- Fig. 2: einen vergrößerten Ausschnitt auf die Schneide eines Rackelmessers,
- Fig. 3: das Rackeln eines Films aus einem Polymer,
- Fig. 4: ein Lumineszenz aufweisendes elektromagnetisches Teilspektrum innerhalb eines Meßbereichs,
- Fig. 5: ein Absorption aufweisendes elektromagnetisches Teilspektrum innerhalb eines Meßbereichs,
- Fig. 6: eine Eichkurve für eine Farbgebung eines Polymers unter Zuhilfenahme eines Lasers und
- Fig. 7: einen Ausschnitt einer mikrostrukturierten Oberfläche eines Pigments.

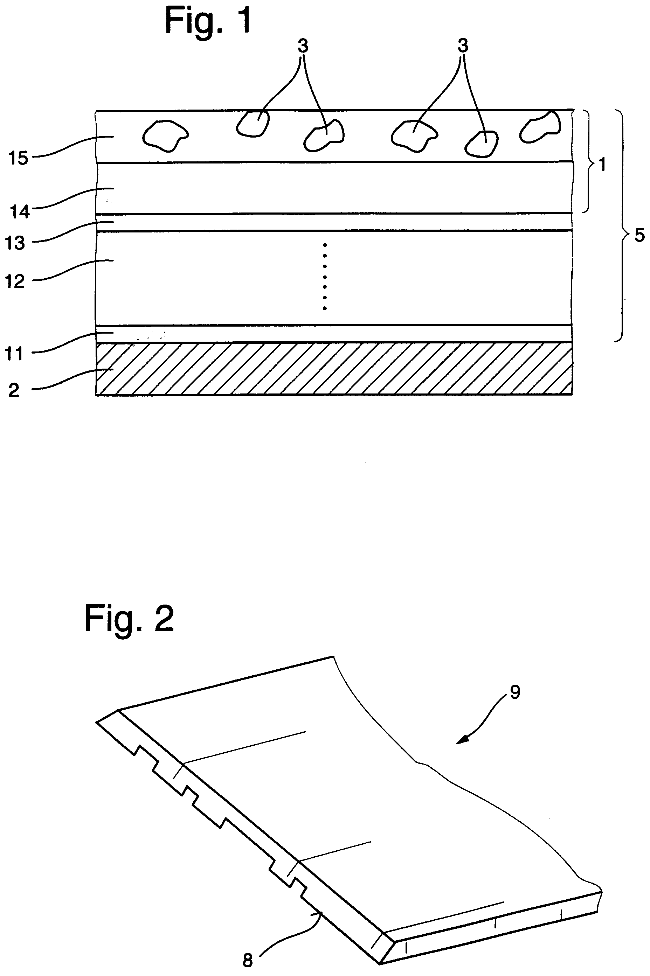

In Figur 1 ist ein Schnitt durch eine Lackierung 5 eines Gegenstandes 2, insbesondere eines Karosseriebleches einer Kfz-Karosserie, mit einem EffektLackierung 5 dargestellt. Die Lackierung 5 weist einen mehrschichtigen Aufbau aus flächigen übereinander angeordneten Schichten auf. Der Schichtaufbau der Lackierung über dem Gegenstand 6 umfaßt eine Phosphatierschicht 11, eine Grundierschicht 12, eine Füllerschicht 13, ein Farblackschicht 14 und eine äußere Lackschicht 15. Gegebenenfalls kann diese Lackschicht 15 noch mit einer weiteren Lackschicht und zwar einer Klarlackschicht abgedeckt sein, damit Pigmente 3, die in der Lackschicht 15 angeordnet sind, nicht aus deren Oberfläche herausragen können.

Die äußere aus Klarlack gebildete und mit (Effekt-)Pigmenten 3 versehene Lackschicht 15 und die Farblackschicht 14 bilden die Effektlackierung 1. Im wesentlichen beruht der genannte Effekt darauf, daß die aus einem Polymer gefertigten Pigmente 3 eine flüssigkristalline Struktur mit chiral nematischer Phase aufweisen. Die genaue Herstellung derartiger Pigmente 3 und deren Wirkungsweise sind im wesentlichen der DE 42 40 743 A1 entnehmbar.

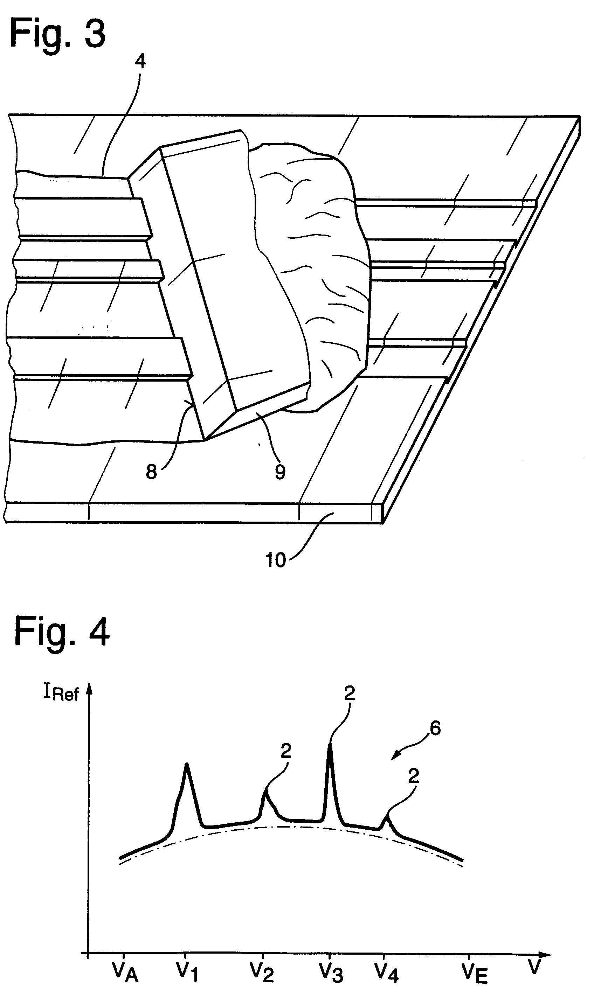

Erfindungsgemäß sind die Pigmente 3 jedoch nicht nur für den sogenannten 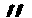 Farb-Umschlag- oder Farb-Flop-Effekt" vorgesehen, bei dem sich der Farbeindruck der Lackierung 5 in Abhängigkeit vom Betrachtungswinkel ändert, sondern auch als Träger der Kennzeichnung. Unter der Formulierung 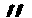 Träger der Kennzeichnung" ist hierbei auch im übertragenen Sinne zu verstehen, wie aus den Ausführungen der Ausführungsbeispiele gemäß den Figuren 4, 5 und 6 hervorgeht, bei den u.a. ein elektromagnetisches Teilspektrum 6 des gesamten elektromagnetischen Spektrums der Lackierung 5 zur Kennzeichnung herangezogen wird.

Die Vornahme der Kennzeichnung ist insbesondere auf eine der im nachfolgenden beschriebenen und in den Figuren 3 bis 7 dargestellten Arten möglich, wobei auch eine Kombination dieser Kennzeichnungsarten gegebenenfalls von Vorteil ist.

In Figur 2 ist eine Schneide 8 eines Rackelmessers 9 dargestellt, wie es zur Herstellung von mit der Kennzeichnung versehenen Pigmenten 3 verwandt wird. Wie in Figur 3 dargestellt ist, ist das Rackelmesser 9 zum dünnen Aufbringen eines gerackelten und vernetzenden Films 4 aus einem Polymer auf einer Unterlage 10 vorgesehen, welcher Film 4 zu Partikel mit einer Größe von vorzugsweise mehreren µm, insbesondere zwischen 10 und 50 µm zerkleinert wird. Die so hergestellten Partikel werden als (Effekt-)Pigmente 3 Bestandteil der Effektlackierung 1.

Zur Einbringung der Kennzeichnung weist das Rackelmesser 4 eine Riffelung auf, die einem Negativ einer Oberflächenstruktur eines Codes einer Kennzeichnung entsprecht. Dadurch kann beim Rackeln des Films 4 der Code aufgebracht werden, indem die Schneide 8 des Rackelmessers 9 den Film 4 ausstreicht. Die Kennzeichnung des Films 4 bzw. entsprechende der Pigmente 3 kann insbesondere mit einem einem Barkode ähnlichen Muster erfolgen.

Wie in Figur 3 dargestellt ist es hierbei günstig, die Unterlage 10, auf der der Film 4 aufgerackelt wird, gleichfalls mit einer Oberflächenstruktur zu versehen, da dann die beiden Flachseiten des Films 4 und damit auch die der Pigmente 3 mit dem kennzeichnenden Code versehen sind.

Der Code der beiden Flachseiten kann sich hierbei entsprechen oder unterschiedlich sein. In letzterem Fall ist die Gesamtanzahl der unterschiedlich aufbringbaren Kennzeichnungen erhöht.

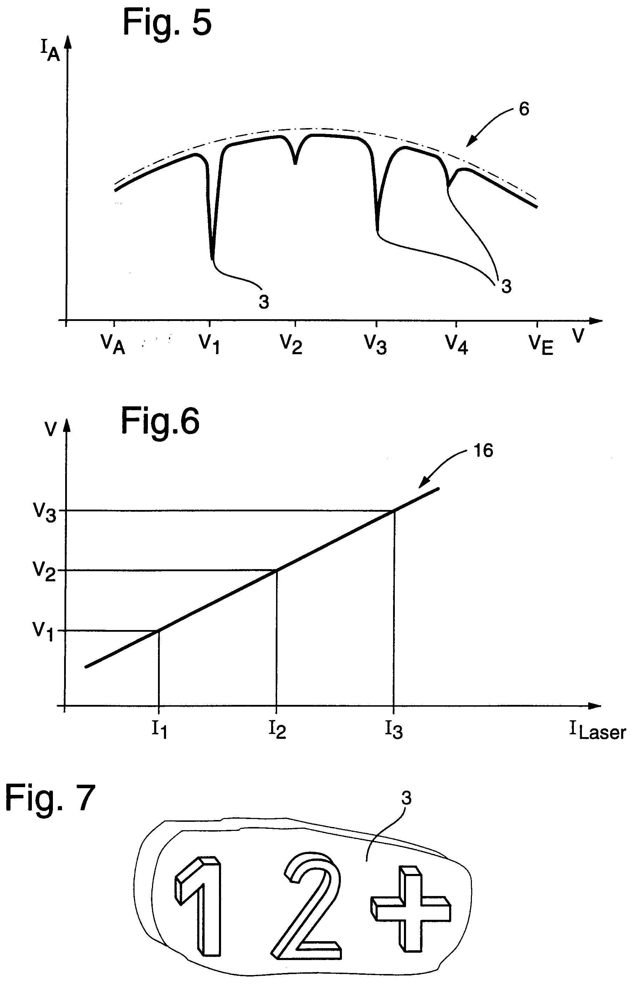

In den Figuren 4 und 5 ist eine Kennzeichnung dargestellt, die sich aus einem innerhalb eines Meßbereiches angeordnetem elektromagnetischen Teilspektrum 6 des gesamten elektromagnetischen Spektrums der Pigmente 3 ergibt.

In Figur 4 ist zumindest das Teilspektrum 6 des gesamten elektromagnetischen Spektrums der Pigmente 3 dahingehend manipuliert, daß es innerhalb des vorgegebenen Meßbereichs, der zwischen den Grenzfrequenzen νA und νE angeordnet ist, ein weitgehend stetiges spektrales elektromagnetisches Teilspektrum 6 aufweist, das bei bestimmten kennzeichnenden Frequenzen ν1, ν2, ν3 und ν4 schmalbandige Extremas 7 von wenigstens 5% relativer Intensitätsänderung aufweist.

Die Einbringung der Kennzeichnung erfolgt in diesem Fall dadurch, daß dem zur Herstellung des Films 4 verwendeten und vernetzenden Polymer Substanzen beigegeben werden, die in dem betrachteten Teilspektrum 6 lumineszieren.

Bei diesen Substanzen kann es sich insbesondere um Halbleiterkristalle auch höherelementige wie bspw. II-VI-Halbleiterkristalle, wie bspw. CdS und/oder III-V- Halbleiterkristalle, wie bspw. GaAs, InP, InGaAs usw. handeln.

Zweckmäßigerweise sind die bestimmten Frequenzen ν1, ν2, ν3 und ν4 des Teilspektrums 6 außerhalb des sichtbaren Spektralbereichs angeordnet, und hierbei insbesondere in einem Spektralbereich, indem die restlichen Bestandteile der Lackierung 5 eine geringe optische Aktivität aufweisen. Dadurch wirken sich diese restlichen Bestandteile der Lackierung 5 allenfalls gering störend auf das die Kennzeichnung aufweisende Teilspektrum 6 aus.

Wie in Figur 4 dargestellt, ist das Teilspektrum 6 zwischen den Grenzfrequenzen νA (Anfangsfrequenz) und νE (Endfrequenz) angeordnet. Die unterschiedlichen Intensitätsmaximas der Extremas 7 befinden sich bei den kennzeichnenden Frequenzen ν1, ν2, ν3 und ν4, die in ihrer Gesamtheit die Kennzeichnung des Gegenstandes 2 bilden.

Da die Einbringung der Extremas 7 mittels Kristallen vorgenommen werden, weisen die einzelnen Extremas 7 eine Halbwertsbreite auf, die denen der Kristalle, also i.a. einigen meV entspricht, wodurch eine Vielzahl von kennzeichnenden Frequenzen möglich ist.

Da ferner die Intensität dieser Extremas 7 mit der Konzentration der verwendeten Substanzen korreliert ist, kann die Intensität der Extremas 7 auch noch zur Kennzeichnung verwendet werden, wodurch die Anzahl der möglichen Kennzeichnungen ohne weiteres im Bereich oberhalb einer Million anzusiedeln ist.

In Figur 5 ist das elektromagnetische Spektrum der Pigmente 3 dahingehend manipuliert, daß es innerhalb des Meßbereiches, der zwischen den Grenzfrequenzen νA und νE angeordnet ist, ein weitgehend stetiges spektrales elektromagnetisches Teilspektrum 6 aufweist, das bei bestimmten kennzeichnenden Frequenzen ν1, ν2, ν3 und ν4 schmalbandige Extremas 7 von wenigstens 5% relativer Intensitätsänderung aufweist.

Die Einbringung der Kennzeichnung erfolgt in diesem Fall dadurch, daß der Film 4 zur Herstellung der Pigmente 3 mit einem Laser abgefahren und die kennzeichnenden Frequenzen ν1, ν2, ν3 und ν4 aus dem Teilspektrum 6 des elektromagnetischen Spektrums der Pigmente 3 beseitigt werden.

Zweckmäßigerweise sind die bestimmten Frequenzen ν1, ν2, ν3 und ν4 außerhalb des sichtbaren Spektralbereichs angeordnet, und hierbei insbesondere in einem Spektralbereich, indem die restlichen Bestandteile der Lackierung 5 eine geringe optische Aktivität aufweisen. Dadurch wirken sich diese restlichen Bestandteile der Lackierung 5 allenfalls gering störend auf das die Kennzeichnung aufweisende Teilspektrum 6 aus.

Wie in Figur 5 dargestellt ist, ist das Teilspektrum 6 zwischen den Grenzfrequenzen νA (Anfangsfrequenz) und νE (Endfrequenz) angeordnet. Die unterschiedlichen Intensitätseinbrüche der Extremas 7 befinden sich bei den kennzeichnenden Frequenzen ν1, ν2, ν3 und ν4, die in ihrer Gesamtheit die Kennzeichnung des Gegenstandes 2 bilden.

Da die Extremas 7 günstigerweise durch Bestrahlung mit einem Halbleiter-Lasers erzeugt werden, weisen die einzelnen Extremas 7 eine Halbwertsbreite auf, die kleiner als 10 Angström und insbesondere kleiner als 1 Angström ist. Dadurch ist auch hier die Anzahl von unterschiedlichen Kennzeichnungen sehr hoch.

In Figur 6 ist eine Eichkurve 16 dargestellt, mit der die Pigmente 3 mit einer farblichen Kennzeichnung versehen werden. Eine farbliche Kennzeichnung muß hierbei nicht auf das sichtbare Spektrum beschränkt sein. Da die Pigmente 3 aus einer flüssigkristallinen Substanz mit chiraler Phase sind, können sie mit dünnen in etwa der Fokusierung des Laserlichtes entsprechenden Farbstreifen versehen werden, die durch Laserlicht hervorgerufen werden. In diesem Fall macht man sich daraus den Nutzen, daß sich die den Frequenzen ν1, ν2 und ν3 zugeordnete Eigenfarbe der Pigmente 3 je nach eingestrahlter Intensität I1, I2 oder I3 des Laserlichts ändert. Wird also der Film 4 örtlich getrennt mit Laserlicht unterschiedlicher Intensität bestrahlt, ist es möglich, das Pigment 3 mit einem farblichen Code, insbesondere ähnlich einem Barkode zu versehen.

In Figur 7 ist eine direkte Kennzeichnung der einzelnen Pigmente 3 mit einer mikrostrukturierten Oberfläche dargestellt. In diesem Fall wird der Film 4 lithographisch mit einem die Kennzeichnung bildenden Muster, im vorliegenden Fall die Zahl zwölf mit hochgestelltem Pluszeichen, versehen.

Andererseits kann der gerackelte Film 4 mittels dieser Methode auch indirekt mit einer Struktur versehen werden, indem vor dem Rackeln des Films 4 die Unterlage 10 und/oder das Rackelmesser 9 matrizenartig mittels Synchrotron-Strahlung-Lithographie kennzeichnend strukturiert werden. Des weiteren ist es auch denkbar die Kennzeichnung mittels eines Stempels (nicht dargestellt) vorzunehmen, der zuvor mittels Synchrotron-Strahlung-Lithographie strukturiert wurde und anschließend patrizenartig in den Film 4 und/oder in die Partikel 3 eingedrückt wird.

Da bei Polymeren mittels Synchrotron-Strahlung-Lithographie Strukturen im Bereich unterhalb von 1 µm hergestellt werden können, kann der Film 4 derart strukturiert werden, daß das die Kennzeichnung darstellende Muster kleiner als die durchschnittliche Pigmentgröße ist.

Für eine mikroskopische Auswertung bzw. Erkennung der Kennzeichnung ist es sinnvoll, daß mit der Synchrotron-Strahlung-Lithographie hergestellte Oberflächenstruktur eines Pigments 3 eine Strichstärke aufweist, die größer 0,5 µm ist.

Eine weitere Möglichkeit der Kennzeichnung ist es, die genannten spektralen Phänomene für sich und/oder mit den gegenständlichen und die Oberflächenstruktur betreffenden Kennzeichnungsarten miteinander zu kombinieren.

Bei rein elektromagnetischer Betrachtungsweise kann die auf das elektromagnetische Spektrum zurückgehende Kennzeichnung z.B. sowohl lokale Minima's der Absorbtion und auch lokale Maxima's einer Lumineszens aufweisen.

Des weiteren kann eine derartige spektrale Kennzeichnung auch noch mit einer topographischen Kennzeichnung der Pigmente, bspw. einer einen Barkode bildenden Oberflächenstruktur, kombiniert werden.

Die Überprüfung der Kennzeichnung kann je nach Art der Kennzeichnung insbesondere zerstörungsfrei spektroskopisch und/oder mikroskopisch erfolgen.

## Patentansprüche

1. Effektlack für zu lackierende Gegenstände mit Pigmenten,
- die durch Zerkleinern eines gerackelten und vernetzten Films hergestellt sind,
- die zumindest einem Ausgangslack einer Lackierung des Gegenstandes beigegeben sind,
- die einen vom Beobachtungswinkel abhängigen Farbeffekt ergeben,
**dadurch gekennzeichnet**,
daß die Pigmente (3) eine Kennzeichnung zur Erkennung und Charakterisierung des Gegenstandes tragen.

2. Effektlack nach Anspruch 1,
**dadurch gekennzeichnet**,
daß die Pigmente (3) eine flüssigkristalline Struktur mit chiraler Phase aufweisen.

3. Effektlack nach Anspruch 1,
**dadurch gekennzeichnet**,
daß die Pigmente (3) eine der Kennzeichnung dienenden Oberflächenstruktur aufweisen.

4. Effektlack nach Anspruch 1,
**dadurch gekennzeichnet**,
daß die Pigmente (3) eine der Kennzeichnung dienenden streifige Oberflächenstruktur ähnlich einem Barkode aufweisen.

5. Effektlack nach Anspruch 1,
**dadurch gekennzeichnet**,
daß die Pigmente (3) eine der Kennzeichnung dienenden Oberflächenstruktur aufweisen und im äußeren Klarlack einer Kfz-Lackierung angeordnet sind.

6. Effektlack nach Anspruch 1,
**dadurch gekennzeichnet**,
daß die Kennzeichnung durch das spektrale Verhalten, insbesondere durch das Absorbtionsspektrum und/oder Lumineszenzspektrum - im folgenden Teilspektrum (6) genannt - der Pigmente (3) gebildet ist, der bei vorgebbaren Wellenlängen Extremas (7) aufweist, bei denen sich die relative Intensität einer im Meßbereich der Kennzeichnung betrachteten elektromagnetischen Welle um wenigstens 5% ändert.

7. Effektlack nach Anspruch 1,
**dadurch gekennzeichnet**,
daß die Kennzeichnung aus einem auf den Pigmenten (3) aufgetragenen Farbmuster gebildet ist.

8. Effektlack nach Anspruch 1,
**dadurch gekennzeichnet**,
daß die Kennzeichnung durch eine auf den Pigmenten (3) mit einer Synchrotron-Strahlung-Lithographie hergestellte Oberflächenstruktur gebildet ist, wobei die Strichstärke der Oberflächenstruktur größer 0,5 µm ist.

9. Verfahren zur Herstellung eines Effektlack für zu lackierende Gegenstände, bei dem
- ein Film eines flüssigkristallinen Polymers auf eine glatte Unterlage aufgerackelt und vernetzt wird,
- der von der Unterlage abgelöste Film wird zu Pigmenten zerkleinert wird,
- die einen vom Beobachtungswinkel abhängigen Farbeffekt ergebenden Pigmente einem Ausgangslack der Lackierung beigegeben werden,
**dadurch gekennzeichnet**,
daß die Pigmente (3) mit einer einen Code aufweisenden Kennzeichnung versehen werden, mittels der der zu lackierende Gegenstand (2) gekennzeichnet wird.

10. Verfahren nach Anspruch 9,
**dadurch gekennzeichnet**,
daß als Polymer ein Polymer mit chiraler Phase gewählt wird.

11. Verfahren nach Anspruch 9,
**dadurch gekennzeichnet**,
daß die Pigmente (3) vor der Beigabe zu dem Ausgangslack mit der Kennzeichnung versehen werden.

12. Verfahren nach Anspruch 9,
**dadurch gekennzeichnet**,
daß die Pigmente (3) vor der Beigabe zu dem Ausgangslack zumindest auf ihrer Oberfläche mit der Kennzeichnung versehen werden.

13. Verfahren nach Anspruch 9,
**dadurch gekennzeichnet**,
daß der Code beim Rackeln aufgebracht wird, indem die Schneide (8) eines Rackelmessers (9) und/oder die Unterlage (10), auf der der Film (4) aufgerackelt wird, mit einer der Oberflächenstruktur des Codes negativ entsprechende Riffelung versehen wird.

14. Verfahren nach Anspruch 9,
**dadurch gekennzeichnet**,
daß die Oberfläche des Films (4) und/oder die Pigmente (3) zumindest mittelbar unter Zuhilfenahme einer Synchrotron-Strahlung-Lithographie mit einer Oberflächenstruktur versehen wird.

15. Verfahren nach Anspruch 9,
**dadurch gekennzeichnet**,
daß mittels einer Laserbestrahlung des Films (4) und/oder der Pigmente (3) der spektrale Verlauf (6) der Absorption und/oder der Lumineszenz des Films (4) oder der Pigmente (3) in der Weise gezielt verändert mit wird, daß der erzeugte spektrale Verlauf (6) als Code verwendbar ist.

16. Verfahren nach Anspruch 9,
**dadurch gekennzeichnet**,
daß mittels einer Laserbestrahlung der Film (4) und/oder die Pigmente (3) an unterschiedlichen Orten des Films (4) und/oder der Pigmente (3) mit unterschiedlicher Intensität der Film (4) und/oder die Pigmente (3) mit einem farblichen Code versehen werden.

17. Verfahren nach Anspruch 9,
**dadurch gekennzeichnet**,
daß mittels einer Laserbestrahlung der Film (4) und/oder die Pigmente (3) der spektrale Verlauf (6) des Films (4) und/oder der Pigmente (3) bei bestimmten Wellenlängen sprungartig verändert wird und der erzeugt spektrale Verlauf (6) als Code verwendbar ist.
